# EUROPÄISCHE PATENTANMELDUNG

(11) **EP 4 456 384 A1**
(43) Veröffentlichungstag der Anmeldung: **30.10.2024**
(21) Anmeldenummer: 23169844.0
(22) Anmeldetag: 25.04.2023
(51) Int. Cl.: H02K 5/12, H02K 15/12

(54) **DIGITALES ZWILLINGSSYSTEM**

(71) Anmelder: Siemens Aktiengesellschaft, 80333 München (DE)
(72) Erfinder: Hösle, Markus, 91058 Erlangen (DE)
(74) Vertreter: Siemens Patent Attorneys

(57) **Zusammenfassung**

Die Erfindung betrifft ein digitales Zwillingssystem (1000), aufweisend: einen physischen Teil (204) mit einer physischen Vorrichtung (10) zur Imprägnierung eines Körpers (2,3,4), aufweisend einen Antrieb (11) mit einer Antriebswelle (12) zur Bewegung des Körpers (2,3,4) um eine Rotationsachse (A) und eine Träufeleinheit (51) zur Beträufelung des Körpers (2,3,4) mit Imprägniermaterial (6), und mit einem zu imprägnierenden physischen Körper (2,3,4), aufweisend wenigstens eine Wicklung (41,41B); einen virtuellen Teil (203) mit einem digitalen Abbild des Körpers (2,3,4); ein Erfassungselement (200) zur Erfassung von Daten des Imprägniermaterials (6) innerhalb des Körpers und/oder auf dem Körper, insbesondere eines Verlaufs und/oder eines Füllstands des Imprägniermaterials; ein Datenübertragungselement (201) zur Datenübertragung zwischen dem physischen Teil (204) und dem virtuellen Teil (203); wobei die Daten durch das Datenübertragungselement (201) zum virtuellen Teil (203) übertragbar sind, wobei das digitale Abbild des Körpers (4D) in Abhängigkeit der Daten veränderbar ist.

## Beschreibung

Die Erfindung betrifft ein digitales Zwillingssystem.

Dynamoelektrische Maschinen, wie z. B. Elektromotoren, werden u. a. mittels gewickelten Rund-Lackdrähten hergestellt, welche nach einem Wickelprozess in das Blechpaket des Stators eingezogen werden. Daran schließt sich oftmals ein Ausformen des Wickelkopfes, ein Bandagieren des Wickelkopfes und das Einbringen der Phasenisolation an. Der Drahtlack entspricht vorzugsweise im Anwendungsbereich der Niederspannungsmotoren (bis 1 kV) der Hauptisolation.

Zur weiteren mechanischen Verfestigung sowie zur Passivierung vor äußeren Einflüssen schließt sich dann üblicherweise eine Imprägnierung an. Dies stellt fertigungstechnisch und prozessbedingt einen aufwändigen Vorgang dar, bei dem flüssiges Reaktivharz (z.B. Epoxy oder Polyester) in das Blechpaket des Stators eingebracht wird (vor allem durch Tauchen, aber auch Tauchrollieren oder Träufeln). Insbesondere der Imprägniervorgang, welcher oftmals in Form einer Tauchimprägnierung sowie einer anschließenden Heißluftofen-Härtung realisiert wird, ist ein großer Kostenfaktor in der Fertigung.

Im Anschluss daran wird das Reaktivharz oftmals geliert und letztlich gehärtet, was üblicherweise durch Heißluft, Bestromung der Wicklung, Infrarot- oder Ultraviolett-Bestrahlung oder Induktion geschieht und dadurch zeit- und energieintensiv ist.

Ferner kann es bei diesem Verfahren zu Mängeln kommen, bspw. zu einer unzureichenden Harzmenge im Bereich von ungünstigen Drahtkreuzungen der Wicklung.

Der Erfindung liegt die Aufgabe zugrunde, die Imprägnierung zu verbessern.

Die Lösung der Aufgabe gelingt durch Anspruch 1, d.h. ein digitales Zwillingssystem, aufweisend:
- einen physischen Teil mit einer physischen Vorrichtung zur Imprägnierung eines Körpers, aufweisend einen Antrieb mit einer Antriebswelle zur Bewegung des Körpers um eine Rotationsachse und eine Träufeleinheit zur Beträufelung des Körpers mit Imprägniermaterial, und mit einem zu imprägnierenden physischen Körper, aufweisend wenigstens eine Wicklung,
- einen virtuellen Teil mit einem digitalen Abbild des Körpers,
- ein Erfassungselement zur Erfassung von Daten des Imprägniermaterials innerhalb des Körpers und/oder auf dem Körper, insbesondere eines Verlaufs und/oder eines Füllstands des Imprägniermaterials,
- ein Datenübertragungselement zur Datenübertragung zwischen dem physischen Teil und dem virtuellen Teil,
- wobei die Daten durch das Datenübertragungselement zum virtuellen Teil übertragbar sind, wobei das digitale Abbild des Körpers in Abhängigkeit der Daten veränderbar ist.

Dadurch dass die Daten dem virtuellen Teil übermittelt werden, kann, z. B. durch künstliche Intelligenz, der Imprägnierprozess für verschiedene Varianten von Statoren (insbesondere verschiedene axiale Längen, unterschiedliche Nutenquerschnitte, verschiedene Achshöhen und weitere), Rotoren oder auch für andere Körper optimiert werden. So können Zeit und Ressourcen gespart und eine gute Qualität erreicht werden.

Vorteilhaft findet die Beträufelung bei einem Stator mit Wicklungssystem statt, der zumindest Lagerschilde oder Adapterlagerschilde aufweist, die zumindest den Wickelkopf umgreifen.

Vorteilhaft ist eine Ausführung, wonach der Körper vor und/oder während und/oder nach der Beträufelung sich um die Rotationsachse bewegt, insbesondere rotiert, wobei das Erfassungselement Daten des Imprägniermaterials innerhalb des Körpers und/oder auf dem Körper, insbesondere eines Verlaufs und/oder eines Füllstands des Imprägniermaterials, erfasst, wobei das Datenübertragungselement die Daten zum virtuellen Teil überträgt, wobei sich das digitale Abbild des Körpers in Abhängigkeit der Daten ändert.

Durch die Rotation und eine Kapillarwirkung kann das Imprägniermaterial gut in z. B. Nuten eines Stators einziehen, wodurch es gut verteilt wird. Der Verlauf wird vorteilhaft überwacht. Auch der Füllstand kann überwacht werden. So kann an Stellen, an denen z. B. zu wenig Imprägniermaterial vorliegt, nachgebessert werden.

Vorzugsweise weist das Imprägniermaterial Harz auf.

Flüssiges Reaktivharz (z.B. Epoxy oder Polyester) eignet sich besonders gut.

Vorteilhaft ist eine Ausführung, wonach der physische Teil eine Anschlusseinheit aufweist, wobei die Anschlusseinheit zum Anschluss der Wicklung an eine elektrische Energieversorgung ausgebildet ist, wobei die Wicklung durch einen Stromfluss der elektrischen Energieversorgung erwärmbar ist.

Die Wicklung ist vorteilhaft vor und/oder während und/oder nach der Beträufelung zur Erwärmung der Wicklung von Strom durchfließbar.

Während des Träufelns wird die Wicklung beispielsweise ständig bestromt. Der Stromfluss kann gleichmäßig sein. Der Stromfluss kann sich steigern und auch wieder abflachen und, insbesondere gegen Ende des Imprägniervorganges, gegen Null gehen oder Null werden, um eine Herauslaufen zu verhindern.

Vorteilhaft ist eine Ausführung, wonach der Körper um einen ersten Winkel in einer ersten Drehrichtung, vorzugsweise in positiver Drehrichtung, rotiert, wobei der Körper um den negativen ersten Winkel oder einen zweiten Winkel in einer zweiten Drehrichtung, vorzugsweise in negativer Drehrichtung, rotiert.

Vorzugsweise vollzieht der Körper eine Pendelrotation. Dies kann auch als Reversierbewegung (ähnlich einem Reversierbetrieb) bezeichnet werden.

Der Körper rotiert z. B. um 180° in der ersten Drehrichtung. Auch andere Winkel sind denkbar. Dies ist insbesondere abhängig von einer Länge der Anschlussleitungen zum Anschluss der Wicklung an die elektrische Energieversorgung.

Auch andere Bewegungsmuster sind möglich. Vorteilhaft ist es z. B. auch, wenn der erste Winkel α1 = n·360° ist, wobei n eine natürliche Zahl ist.

So kann der gesamte Körper behandelt werden.

Vorteilhaft ist zudem eine Ausführung, wonach der zweite Winkel α2 zwischen -(n·360° + 1°) und -(n·360° + 10°) liegt, vorzugsweise -(n.360° + 5°) ist, wobei n eine natürliche Zahl ist.

So kann ein gleichbleibender Verlauf über den gesamten Körper hinweg erreicht werden.

Dies kann auch mit dem vorteilhaften Vorgehen erreicht werden, wonach der Körper abwechselnd in erster Drehrichtung um den ersten Winkel α1 und in zweiter Drehrichtung um den zweiten Winkel α2 bewegt wird, wobei der zweite Winkel wenigstens α2 = -(α1 + 1°) und höchstens α2 = -(α1 + 10°) ist, vorzugsweise α2 = -(α1 + 5°) ist.

Die Bewegungsmuster können auch modulierte und überlagerte Bewegungsmuster beinhalten (z. B. geneigt, schwankend, taumelnd, schraubenförmig)
Vorteilhaft ist eine Ausführung, wonach der Körper in der ersten Drehrichtung mit einer ersten Drehgeschwindigkeit rotiert, wobei der Körper in der zweiten Drehrichtung mit einer zweiten Drehgeschwindigkeit rotiert wobei die erste Drehgeschwindigkeit größer ist als die zweite Drehgeschwindigkeit.

Durch die Drehung und auch durch unterschiedliche Geschwindigkeiten bei der Pendelrotation kann das Imprägniermaterial besonders gut verteilt werden.

Pendelnde oder auch modulierende Bewegungen des Körpers sind zur Verbesserung der Verteilung des Imprägniermaterials von Vorteil.

Es können auch schraubenähnliche Bewegungsmuster vollzogen werden.

Zudem kann auch eine weitere Bewegung axial überlagert werden.

Durch eine während des Imprägniervorgangs, vorzugsweise ständige, vorzugsweise positionsgenaue (z. B. axial und in Umfangsrichtung), Überwachung des Verlaufes des Imprägnierharzes können das Bewegungsmuster und/oder die Bestromung schon während der Imprägnierung verändert bzw. optimiert werden.

Das Erfassungselement zur Erfassung von Daten des Imprägniermaterials innerhalb des Körpers und/oder auf dem Körper, insbesondere eines Verlaufs und/oder eines Füllstands des Imprägniermaterials ist z.B. eine Ultraschall-Sonde.

Vorteilhaft ist eine ständige positionsgenaue (axial und/oder in Umfangsrichtung) Überwachung des Verlaufes des Imprägnierharzes, insbesondere durch wenigstens eine Ultraschall-Sonde.

Es können auch mehrere Erfassungselemente eingesetzt werden.

Vorteilhaft ist eine Ausführung, wonach bei Erkennen eines Imprägniermangels, eine Dosiermenge des Imprägniermaterials und/oder ein Dosierort und/oder ein Stromfluss in der Wicklung zur Änderung einer Wicklungstemperatur veränderbar ist.

Ein Mangel ist z. B. eine unzureichende Harzmenge im Bereich von ungünstigen Drahtkreuzungen der Wicklung.

Dies bedeutet, dass eine Menge und/oder eine vorgegebene Temperatur des verwendeten Imprägniermaterials beispielsweise erhöht oder auch verringert wird. Dies kann dann sofort während der Imprägnierung des Körpers verändert werden oder auch erst später. Zudem kann die Kenntnis über einen Imprägniermangel später auch für die Imprägnierung anderer Körper genutzt werden, beispielsweise mittels künstlicher Intelligenz.

Vorteilhaft ist eine Ausführung, wonach der Körper im Bezug zur Horizontalen vertikal kippbar ist.

Im Falle eines zu imprägnierenden gekippten Stators kann eine Düse, die das Imprägniermaterial ausgibt, an einem Wickelkopf ansetzen. Das, vorteilhaft wenigstens im Wesentlichen flüssige, Imprägniermaterial fließt dann auf die gegenüberliegende Seite des Körpers, füllt anschließend die Nuten, in welchen die Wicklung liegt, auf und zuletzt wird der diesseitige Wickelkopf imprägniert.

Es können auch mehrere Düsen eingesetzt werden, die vorteilhaft umfänglich verteilt sind.

Die Lösung der Aufgabe gelingt ferner durch ein Verfahren zur Interaktion eines digitalen Zwillingssystems, aufweisend:
- einen physischen Teil mit einer physischen Vorrichtung zur Imprägnierung eines Körpers, aufweisend einen Antrieb mit einer Antriebswelle zur Bewegung des Körpers um eine Rotationsachse und eine Träufeleinheit zur Beträufelung des Körpers mit Imprägniermaterial, und mit einem zu imprägnierenden physischen Körper, aufweisend wenigstens eine Wicklung,
- einen virtuellen Teil mit einem digitalen Abbild des Körpers,
- ein Erfassungselement zur Erfassung von Daten des Imprägniermaterials innerhalb des Körpers und/oder auf dem Körper, insbesondere eines Verlaufs und/oder eines Füllstands des Imprägniermaterials,
- ein Datenübertragungselement zur Datenübertragung zwischen dem physischen Teil und dem virtuellen Teil,
- wobei die Daten durch das Datenübertragungselement zum virtuellen Teil übertragen werden, wobei das digitale Abbild des Körpers in Abhängigkeit der Daten verändert wird.

Vorteilhaft ist eine Ausführung, wonach der Körper vor und/oder während und/oder nach der Beträufelung um die Rotationsachse rotiert wird, wobei durch das Erfassungselement Daten des Imprägniermaterials innerhalb des Körpers und/oder auf dem Körper, insbesondere eines Verlaufs und/oder eines Füllstands des Imprägniermaterials, erfasst werden, wobei durch das Datenübertragungselement die Daten zum virtuellen Teil übertragen werden, wobei das digitale Abbild des Körpers in Abhängigkeit der Daten verändert wird.

Das Verfahren wie auch das eingangs beschriebene Zwillingssystem ist für verschiedene Körper geeignet. Es eignet sich für Statoren, Rotoren in verschiedenen Spannungsbereichen, mit verschiedenen Achshöhen, axialen Längen, Nutquerschnitten, Kupferfüllfaktoren, Drahtquerschnitten etc., jedoch auch für Transformatoren.

Vorteilhaft ist eine Ausführungsform, wonach bei Erkennen eines Imprägniermangels, eine Dosiermenge des Imprägniermaterials und/oder ein Dosierort und/oder ein Stromfluss in der Wicklung zur Änderung einer Wicklungstemperatur, insbesondere in einer jeweiligen Nut, verändert wird.

Die Lösung der Aufgabe gelingt ferner durch ein Verfahren zur Erzeugung eines als digitales Abbild eines zu imprägnierenden physischen Körpers, mit wenigstens einer Wicklung, fungierenden Softwareobjekts, wobei das digitale Abbild einem virtuellen Teil eines digitalen Zwillingssystems angehört.

Das digitale Zwillingssystem wurde bereits erläutert.

Vorteilhaft ist eine Ausführung, wonach das Softwareobjekt zyklisch verändert wird.

Beispielsweise werden durch das Erfassungselement Daten des Imprägniermaterials innerhalb des Körpers und/oder auf dem Körper, insbesondere eines Verlaufs und/oder eines Füllstands des Imprägniermaterials, erfasst. Dies kann ständig erfolgen oder auch zyklisch. Das Datenübertragungselement überträgt die Daten, woraufhin das digitale Abbild des Körpers und somit das Softwareobjekt in Abhängigkeit der Daten verändert wird. Das Softwareobjekt kann z. B. einmal pro Sekunde verändert werden. Der Zyklus kann jedoch auch kürzer oder länger sein. Besonders geeignet ist ein Zyklus von min. 1 ms und max. 100 ms.

Im Folgenden wird die Erfindung anhand der in den Figuren dargestellten Ausführungsbeispiele näher beschrieben und erläutert. Es zeigen:
- FIG 1: eine Ausgestaltung des digitalen Zwillingssys-tems,
- FIG 2 und 3: einen Körper mit Wicklung,
- FIG 4: eine dynamoelektrische rotatorische Maschine,
- FIG 5: einen beispielhaften Verlauf,
- FIG 6 und 7: eine Rotation,
- FIG 8: ein mögliches Bewegungsmuster,
- FIG 9: einen möglichen Temperaturverlauf,
- FIG 10: einen Stator.

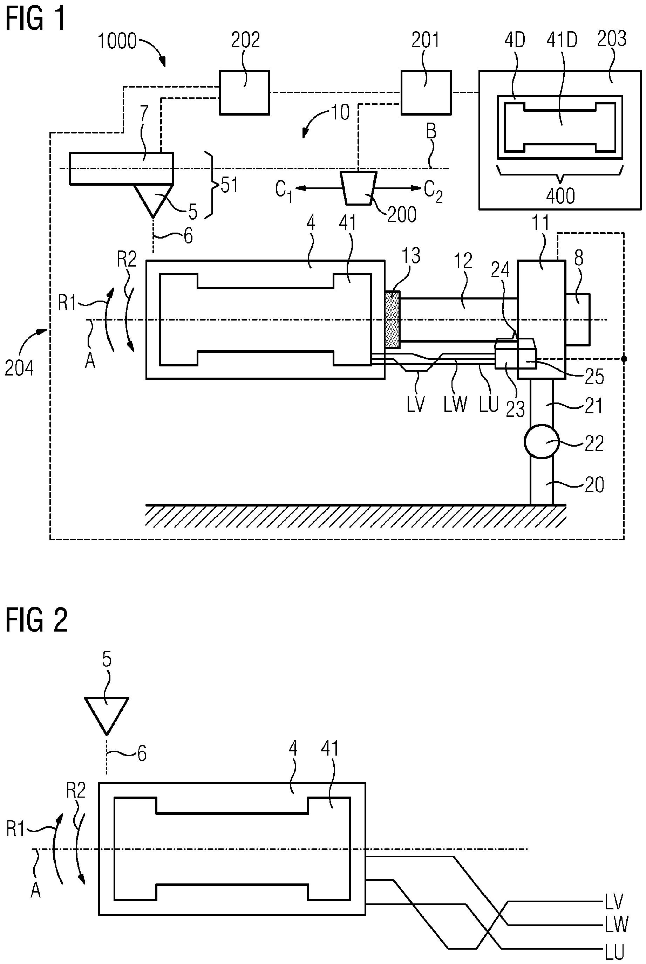

FIG 1 zeigt eine Ausgestaltung des digitalen Zwillingssystems 1000.

Die Figur zeigt einen virtuellen Teil 203 sowie einen physischen Teil 204.

Es sind ferner ein Erfassungselement 200, z. B. Ultraschall-sonde, gezeigt. Eine Bewegung des Erfassungselements 200 ist durch C1 und C2 dargestellt.

Die Figur zeigt ein Datenübertragungselement 201 zur Datenübertragung zwischen dem physischen Teil 204 und dem virtuellen Teil 203. Der virtuelle Teil 203 weist ein digitales Abbild 4D des Körpers 4 auf. Auch die Wicklung 41 hat in der Figur ein digitales Abbild 41D.

Das Erfassungselement 200 ist zur Erfassung von Daten des Imprägniermaterials 6 innerhalb des Körpers 4 und/oder auf dem Körper, insbesondere eines Verlaufs und/oder eines Füllstands des Imprägniermaterials, ausgebildet. Die Daten sind durch das Datenübertragungselement 201 zum virtuellen Teil 203 übertragbar, wobei das digitale Abbild des Körpers 4D in Abhängigkeit der Daten veränderbar ist.

Die Figur zeigt zudem eine Steuerung 202. Die Steuerung 202 kann Daten vom Datenübertragungselement 201 empfangen und so z. B. die Träufeleinheit 51 anweisen, mehr Imprägniermaterial auszugeben oder an einer anderen Stelle Imprägnieraterial auszugeben.

Die Figur zeigt zudem ein Softwareobjekt 400. Das Softwareobjekt 400 dient als digitales Abbild 4D des zu imprägnierenden physischen Körpers.

Die Figur zeigt eine Imprägniervorrichtung 10.

Die Imprägniervorrichtung 10 zur Imprägnierung eines wenigstens eine Wicklung 41 tragenden Körpers weist auf: Einen Antrieb 11 mit einer Antriebswelle 12, wobei der Antrieb 11 zur Bewegung des Körpers 4 um die Rotationsachse A ausgebildet ist. Die Antriebswelle 12 weist wenigstens ein Befestigungselement 13 zur lösbaren Anbindung des Körpers 4 an die Antriebswelle 12 auf.

Die in der Figur gezeigte Imprägniervorrichtung 10 weist zudem die Träufeleinheit 51 auf, wobei die Träufeleinheit 51 zur Beträufelung des Körpers 4 mit dem Imprägniermaterial 6 ausgebildet ist.

Die Träufeleinheit 51 weist in der Figur die Dosierdüse 5 auf sowie ein Reservoir 7, in welchem das Imprägniermaterial 6 vorgehalten wird. Es kann dort auch gemischt und/oder vorgewärmt werden.

Die Träufeleinheit 51 kann z. B. entlang einer Achse B verfahren werden.

Zudem weist die gezeigte Imprägniervorrichtung 10 eine Anschlusseinheit 24 auf, wobei die Anschlusseinheit 24 zum Anschluss der Wicklung 41 an eine elektrische Energieversorgung ausgebildet ist. Hierzu ist in der Figur die Energieversorgungseinheit 25 dargestellt.

Die Wicklung 41 ist in der Figur mittels der Litzenleiter LU, LV, LW an die Energieversorgungseinheit angeschlossen. In der Figur gelingt dies durch eine Klemmplatte 23.

Auf diese Weise wird ein Stromfluss durch die Wicklung ermöglicht.

Die Litzenleiter sind vorteilhaft flexibel.

Die Litzenleiter sind vorteilhaft so lang, dass sie auch bei z. B. drei vollen Umdrehungen des Körpers die Wicklung 41 mit der Energieversorgungseinheit 25 verbinden und nicht abreißen bzw. sich nicht lösen. Sie können sich beim Drehen um die Antriebswelle 12 wickeln und an dieser anliegen.

Je nach Anwendung, sind die Litzenleiter so lang, dass zwischen einer und zehn vollen Umdrehungen möglich sind.

Wenn der Körper 4 z. B. in die Gegenrichtung bewegt wird, werden die auf der Antriebswelle 12 aufgewickelten Litzenleiter LU, LV, LW wieder abgewickelt.

Es ist auch möglich, mittels Schleifkontakten Strom von der Energieversorgungseinheit für die Wicklung abzugreifen. Jedoch wird die in der Figur dargestellte Ausführungsform bevorzugt.

Die Figur zeigt zudem einen Geber 8.

Die Figur zeigt einen Arm 20 und einen Arm 21, die mittels eines Gelenks 22 verbunden sind. Dies ist eine beispielhafte Ausführungsform, die ein in Bezug zur Horizontalen vertikales Kippen des Antriebs 11 bzw. des Körpers 4 ermöglicht. Es sind auch andere Formen möglich.

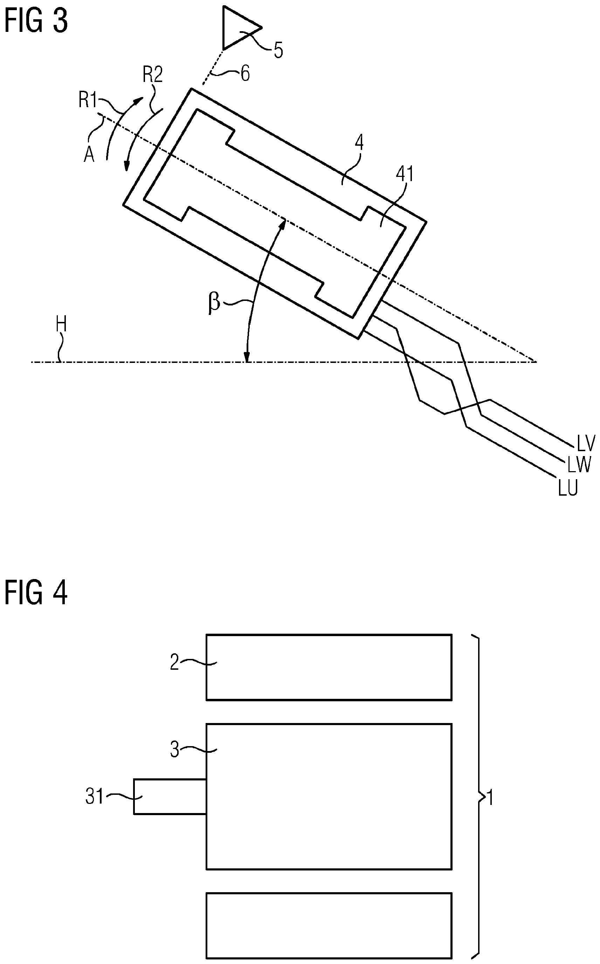

Beispielsweise wird ein Stator 2 oder Rotor 3 (siehe FIG 4) auf die gezeigte Antriebswelle 12 aufgespannt und mittels des Befestigungselements 13 befestigt. Auch andere Aufnahmevorrichtungen sind möglich. Vorteilhaft ist eine Aufnahmevorrichtung, die dazu ausgebildet ist, den Körper 4 um seine Längsachse zu rotieren.

Das Imprägniermaterial 6 ist vorzugsweise flüssig. Im Fall eines zu imprägnierenden Stators wird das Imprägniermaterial 6 beispielsweise auf die Wickelköpfe geträufelt und kann sich aufgrund der Drehbewegung tropffrei und homogen im Wickelkopf verteilen. Durch auftretende Kapillarkräfte kann wird das Imprägniermaterial vorteilhaft in vorliegende Nuten gezogen werden.

Da der Stator 2 durch die Bestromung erwärmt ist bzw. erwärmt wird, wird z. B. die Fließfähigkeit des Imprägniermaterials 6, vorzugsweise des Harzes, verbessert. Zudem wird so besonders gut eine Gelierung und Härtung des Imprägniermaterials 6 herbeigeführt.

Eine Regelung des Bewegungsmusters und/oder der Bestromung kann durch die Steuerung 202 erfolgen. Durch künstliche Intelligenz kann vorher auch vorgegeben werden, wie die Imprägnierung erfolgen soll. Während des Imprägnierprozesses ist zudem eine Nachbesserung möglich.

Die Einspeisezuleitungen bzw. elektrische Zuleitungen, in der Figur als Litzenleiter LU, LV und LW, sind vorteilhaft axial angeordnet.

Damit können die Bewegungsmuster in ihrer in Umfangsrichtung weiter gefasst werden und größere Drehwinkel erreicht werden, da lediglich eine Verdrillung der Zuleitung eintritt und die Gefahr der Abscherung der Zuleitungen geringer ist.

Eine Zuleitung von Imprägniermaterial, insbesondere Harz bzw. ein Harz aufweisendes Material, kann durch die Düse 5 gelingen. Alternativ kann die Harzzuleitung auch über eine axial angeordnete Zuleitung erfolgen, die beispielsweise ein vorgemischtes 2-K-Harz auf zumindest einen Wickelkopf gibt.

Dadurch dass die elektrische Einspeisezuleitung vorteilhaft am Wicklungssystem angeordnet ist, kann durch die damit erzeugte und geregelte Temperatur des Wicklungssystems die Viskosität des Imprägniermaterials beeinflusst werden und verändert werden.

Durch die Überwachung des Fließvorganges des Imprägniermaterials, insbesondere durch eine oder mehrere Ultraschallsonden, z. B. in den Nuten, kann in die Imprägnierung eingegriffen werden und nachgebessert werden. Zur Optimierung des Flusses des Imprägniermaterials kann z. B. ein schnelleres Reversieren, ein anderes Bewegungsmuster und/oder eine Temperatursteuerung über Stromfluss in Wicklung 41 erfolgen.

Die Steuerung 202 kann vorteilhaft sowohl den Antrieb 11 als auch die Träufeleinheit 51 steuern. So können von künstlicher Intelligenz vorgegebene Bewegungsmuster und/oder Temperatureinstellungen der Wicklung über einstellbare Stromstärke optimiert werden und den Imprägniervorgang hinsichtlich Ressourcen, insbesondere im Hinblick auf optimierte Harzmenge für jeweilige Achshöhe, Länge des Stators, Wicklungssystem, Anzahl und Volumen der Nuten, Kupferfüllfaktor, verbessern. Auch eine Optimierung des zeitlichen Ablaufs und eine Vermeidung nicht mehr notwendiger Nacharbeiten wie z.B. Freidrehen der Statorbohrung und Abkühlen ist ein Vorteil.

Damit ist ein immer mehr der Realität angepasster digitaler Zwilling des Imprägnierprozesses für verschiedenste Motorvarianten möglich.

FIG 2 zeigt einen Körper 4, der eine Wicklung 41 trägt.

Der Körper 4 ist beispielsweise der in FIG 1 gezeigte Rotor 3 oder der Stator 2. Jedoch sind auch andere Körper, die eine Wicklung 41 tragen, mittels des Verfahrens imprägnierbar.

Der Körper 4 wird in der Figur imprägniert, indem dieser mittels eine Dosierdüse 5 Imprägniermaterial 6, insbesondere Harz oder eine Harz aufweisende Mischung, beträufelt wird.

Der Körper 4 wird vor und/oder während und/oder nach der Beträufelung um eine Rotationsachse A bewegt.

Die Wicklung 41 wird vor und/oder während und/oder nach der Beträufelung von Strom durchflossen.

Dies gelingt in der Figur durch angeschlossene Litzenleiter LU, LV, LW. Diese sind vorteilhaft an eine Energieversorgungseinheit (siehe Bezugszeichen 25 in FIG 4) angeschlossen.

Durch den Stromfluss und einen damit einhergehenden Wärmeverlust, wird der Körper erwärmt.

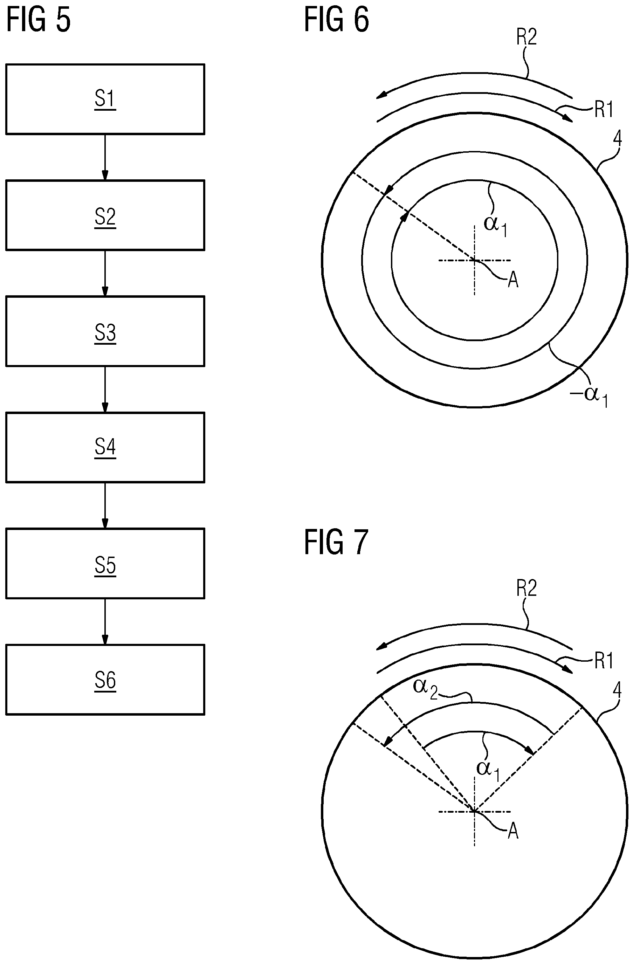

Das Bezugszeichen R1 zeigt, dass der Körper 4 um einen ersten Winkel in einer ersten Drehrichtung, vorzugsweise in positiver Drehrichtung, gedreht wird. Das Bezugszeichen R2 zeigt, dass der Körper um den negativen ersten Winkel gedreht wird. Dies wird in FIG 6 verdeutlicht.

Es ist auch möglich, dass der Körper um einen zweiten Winkel in einer zweiten Drehrichtung, vorzugsweise in negativer Drehrichtung, gedreht wird. Dies wird in FIG 7 verdeutlicht.

Vorteilhaft ist bei der Beträufelung, wenn der Körper abwechselnd in erster Drehrichtung um den ersten Winkel und in zweiter Drehrichtung um den zweiten Winkel bewegt wird, wobei der zweite Winkel wenigstens α2 = -(α1 + 1°) und höchstens α2 = -(α1 + 10°) ist, vorzugsweise α2 = -(α1 + 5°) ist.

FIG 3 zeigt den Körper 4, im Bezug zur Horizontalen vertikal gekippt ist. Vorteilhaft ist hierbei ein Kippwinkel β, der zwischen 5° und 60° bezüglich der Horizontalen liegt.

Besonders gut ist ein Kippwinkel β, der zwischen 10° und 35° bezüglich der Horizontalen liegt.

Bei einseitiger Befüllung aus einem Harzreservoir kann z.B. ein Stator gut befüllt werden. Das Imprägniermaterial 6, insbesondere Harz, fließt dann durch die Neigung und eine geeignete Drehbewegung entlang der Nuten im Wesentlichen axial durch den Stator, beispielsweise über Kapillare der Wicklung in den Nuten, bis es den auf der anderen Seite des Stators befindlichen Wickelkopf erreicht und befüllt hat.

Durch den Kapillareffekt fließt das Imprägniermaterial vorzugsweise in der Wicklung bis zu einer gewissen Sättigung. Eine exakte Eindosierung der jeweils für den Stator 2 richtigen Menge des Imprägniermaterials ist durch die Erfindung leicht möglich.

FIG 4 zeigt eine dynamoelektrische rotatorische Maschine 1 mit einem Stator 2, einem Rotor 3 und einer Welle 31.

Der Rotor und/oder Stator wurden mittels des beschriebenen Verfahrens imprägniert.

FIG 5 zeigt das Verfahren.

In einem Verfahrensschritt S1 wird der Körper 4 (siehe FIG 1) von Strom durchflossen. Der Körper 4 erwärmt sich dadurch.

Es ist möglich, eine definierte Zeitspanne abzuwarten, um mit Verfahrensschritt S2 fortzufahren. Alternativ wird unmittelbar danach im Verfahrensschritt S2 mittels der Dosierdüse 5 Imprägniermaterial 6 zur Beträufelung des Körpers 4 ausgeleitet.

Der Körper 4 wird in einem Verfahrensschritt S3 in die erste Drehrichtung R1 rotiert und in die zweite Drehrichtung R2 rotiert. Es erfolgt vorteilhaft eine Pendelrotation.

Durch das Erfassungselement 200 erfolgt in einem Verfahrensschritt S4 die Erfassung von Daten des Imprägniermaterials 6 innerhalb des Körpers und/oder auf dem Körper, insbesondere eines Verlaufs und/oder eines Füllstands des Imprägniermaterials.

In einem Verfahrensschritt S5 werden Daten durch das Datenübertragungselement 201 zum virtuellen Teil 203 übertragen.

Die Daten beinhalten vorteilhaft Informationen zum Füllstand und Verlauf des Imprägniermaterials. Auch andere Informationen können beinhaltet sein.

In einem Verfahrensschritt S6 wird das digitale Abbild des Körpers in Abhängigkeit der Daten verändert.

Nicht dargestellt sind mögliche weitere Schritte, wie beispielsweise ein Ändern der Dosiermenge oder eines Dosierortes. Die Dosierdüse 5 kann hierzu, während sie Imprägniermaterial ausleitet, umfänglich und/oder axial verfahren werden. Die Ausleitung des Imprägniermaterials kann jedoch auch gestoppt werden, wenn die Dosierdüse verfahren werden soll.

Eine Kombination von Erwärmung der Wicklung, wobei die Wicklung vorteilhaft Kupfer aufweist, durch die beschriebene Bestromung sowie das Aufbringen des Imprägniermaterials durch Träufeln und die Pendelbewegung des zu imprägnierenden Körpers verhindert ein Abtropfen des Imprägniermaterials. Eine homogene Verteilung des Imprägniermaterials, beispielsweise im Wickelkopf, oder z. B. in Nuten von Rotor oder Stator kann dadurch gut erreicht werden.

Beim Imprägnieren kann - z. B. je nach Art und Größe des Körpers - eine Umkehrgeschwindigkeit, eine Position der Dosierdüsen, zeitweise Verringerung der Dosiermenge vor und während der Umkehr sowie eine zeitliche Varianz aufeinander folgender Umkehrprozesse variiert werden.

Die Dosiermenge kann z.B. während einer vollen Umdrehung maximiert werden, um dann während des Umkehrprozesses minimiert zu werden, um ein Abtropfen zu verhindern.

Der Umkehrprozess kann z.B. nach jeweils 360° (oder ganze Vielfache davon) oder aber nach variablen Rotationswinkeln (z.B. 1. 360°, 2. -365°, 3. +370°, ...) geschehen, um eine möglichst homogene Verteilung zu gewährleisten.

Die Anschlussleitungen bzw. Einspeiseleitungen können auch derart flexibel und lang ausgestaltet sein, dass nur wenige oder gar keine Umkehrungen während des eigentlichen Dosierprozesses notwendig sind. Die Länge und Art der Anschlussleitungen sind vorteilhaft so zu wählen, dass möglichst geringe joulesche Verluste in den Anschlussleitungen vorhanden sind.

Besonders vorteilhaft sind hierbei die beschriebenen flexiblen Litzenleiter mit einem geeigneten Querschnitt, der z. B. nennenswert größer ist als der Querschnitt der Wicklung. Jedoch sind auch andere Ausführungsformen möglich.

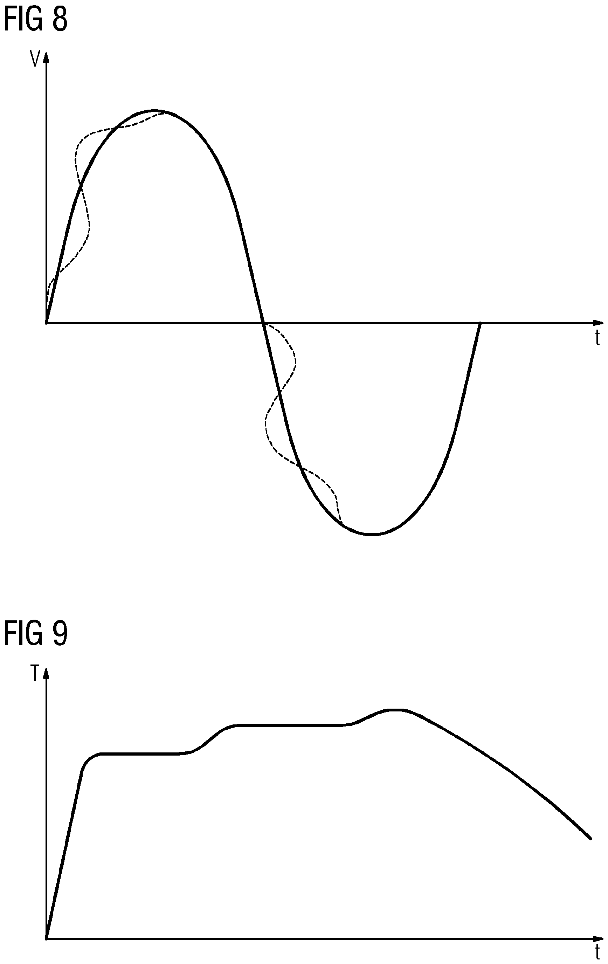

FIG 8 zeigt mögliche Bewegungsmuster des Körpers über die Zeit t.

Der Körper kann gleichmäßig rotieren, siehe Verlauf V der durchgängigen Linie für eine Umdrehung von 360°. Der Körper kann während einer Umdrehung jedoch auch wie von der gestrichelten Linie dargestellt rotieren.

FIG 9 zeigt einen möglichen Temperaturverlauf der Wicklung. Die Erwärmung gelingt vorteilhaft durch die Bestromung der Wicklung.

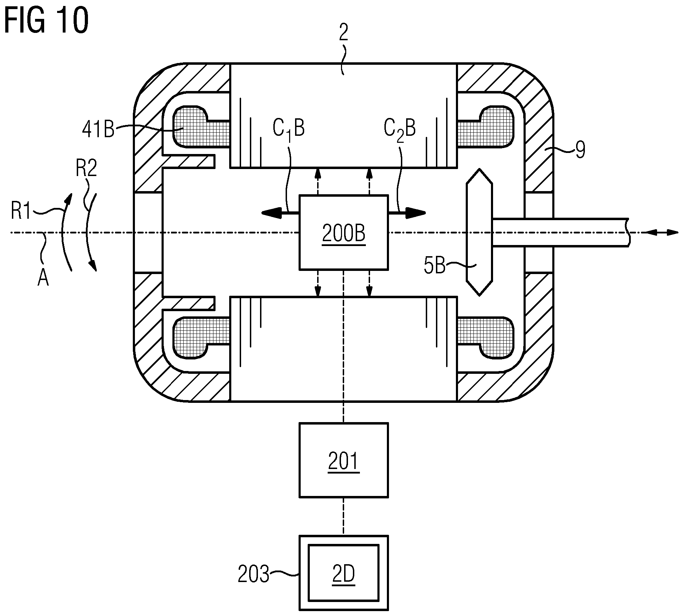

FIG 10 zeigt Details des Stators 2.

Der Stator weist Wickelköpfe 41B auf. Auch ein Lagerschild 9 ist gezeigt. Eine Düse 5B kann auch innerhalb des Stators 2 verfahren werden und innerhalb der Statorbohrung bzw. der Aussparung innerhalb des Stators imprägnieren. Auch ein Erfassungselement 200B kann dort positioniert sein, eine mögliche Bewegungsrichtung ist mit C1B und C2B dargestellt.

Ein digitales Abbild 2D des Stators ist im virtuellen Teil 203 dargestellt.

Der virtuelle Teil 203 kann auf einer Recheneinheit am Ort der Imprägniervorrichtung vorhanden sein. Der virtuelle Teil 203 kann sich auch in einer Cloud befinden bzw. an einem anderen Ort.

## Patentansprüche

1. Digitales Zwillingssystem (1000), aufweisend:
- einen physischen Teil (204) mit einer physischen Vorrichtung (10) zur Imprägnierung eines Körpers (2,3,4), aufweisend einen Antrieb (11) mit einer Antriebswelle (12) zur Bewegung des Körpers (2,3,4) um eine Rotationsachse (A) und eine Träufeleinheit (51) zur Beträufelung des Körpers (2,3,4) mit Imprägniermaterial (6), und mit einem zu imprägnierenden physischen Körper (2,3,4), aufweisend wenigstens eine Wicklung (41,41B),
- einen virtuellen Teil (203) mit einem digitalen Abbild des Körpers (2,3,4),
- ein Erfassungselement (200) zur Erfassung von Daten des Imprägniermaterials (6) innerhalb des Körpers und/oder auf dem Körper, insbesondere eines Verlaufs und/oder eines Füllstands des Imprägniermaterials,
- ein Datenübertragungselement (201) zur Datenübertragung zwischen dem physischen Teil (204) und dem virtuellen Teil (203),
- wobei die Daten durch das Datenübertragungselement (201) zum virtuellen Teil (203) übertragbar sind, wobei das digitale Abbild des Körpers (4D) in Abhängigkeit der Daten veränderbar ist.

2. Digitales Zwillingssystem nach Anspruch 1, wobei der Körper (2,3,4) vor und/oder während und/oder nach der Beträufelung sich um die Rotationsachse (A) bewegt, insbesondere rotiert, wobei das Erfassungselement (200) Daten des Imprägniermaterials (6) innerhalb des Körpers und/oder auf dem Körper, insbesondere eines Verlaufs und/oder eines Füllstands des Imprägniermaterials (6), erfasst, wobei das Datenübertragungselement (201) die Daten zum virtuellen Teil (203) überträgt, wobei sich das digitale Abbild des Körpers in Abhängigkeit der Daten ändert.

3. Digitales Zwillingssystem (1000), wobei der physische Teil (204) eine Anschlusseinheit (24) aufweist, wobei die Anschlusseinheit (24) zum Anschluss der Wicklung (41) an eine elektrische Energieversorgung (25) ausgebildet ist, wobei die Wicklung durch einen Stromfluss der elektrischen Energieversorgung (25) erwärmbar ist.

4. Digitales Zwillingssystem (1000) nach einem der vorhergehenden Ansprüche, wobei die Wicklung (41) vor und/oder während und/oder nach der Beträufelung zur Erwärmung der Wicklung von Strom durchfließbar ist.

5. Digitales Zwillingssystem (1000) nach einem der vorhergehenden Ansprüche, wobei bei Erkennen eines Imprägniermangels, eine Dosiermenge des Imprägniermaterials und/oder ein Dosierort und/oder ein Stromfluss in der Wicklung zur Änderung einer Wicklungstemperatur veränderbar ist.

6. Digitales Zwillingssystem (1000) nach einem der vorhergehenden Ansprüche, wobei der Körper (2,3,4) um einen ersten Winkel (α1) in einer ersten Drehrichtung, vorzugsweise in positiver Drehrichtung (R1), rotiert, wobei der Körper (4) um den negativen ersten Winkel -(α1) oder einen zweiten Winkel (α2) in einer zweiten Drehrichtung (R2), vorzugsweise in negativer Drehrichtung, rotiert.

7. Digitales Zwillingssystem (1000) nach einem der vorhergehenden Ansprüche, wobei der Körper (4) in der ersten Drehrichtung (R1) mit einer ersten Drehgeschwindigkeit rotiert, wobei der Körper (4) in der zweiten Drehrichtung (R2) mit einer zweiten Drehgeschwindigkeit rotiert wobei die erste Drehgeschwindigkeit größer ist als die zweite Drehgeschwindigkeit.

8. Digitales Zwillingssystem (1000) nach einem der vorhergehenden Ansprüche, wobei der Körper (2,3,4) im Bezug zur Horizontalen vertikal kippbar ist.

9. Verfahren zur Interaktion eines digitalen Zwillingssystems (1000), aufweisend:
- einen physischen Teil (204) mit einer physischen Vorrichtung (10) zur Imprägnierung eines Körpers (2,3,4), aufweisend einen Antrieb (11) mit einer Antriebswelle (12) zur Bewegung des Körpers (2,3,4) um eine Rotationsachse (A) und eine Träufeleinheit (51) zur Beträufelung des Körpers (2,3,4) mit Imprägniermaterial (6), und mit einem zu imprägnierenden physischen Körper (2,3,4), aufweisend wenigstens eine Wicklung (41,41B),
- einen virtuellen Teil (203) mit einem digitalen Abbild (4D) des Körpers (2,3,4),
- ein Erfassungselement (200) zur Erfassung von Daten des Imprägniermaterials (6) innerhalb des Körpers und/oder auf dem Körper, insbesondere eines Verlaufs und/oder eines Füllstands des Imprägniermaterials,
- ein Datenübertragungselement (201) zur Datenübertragung zwischen dem physischen Teil (204) und dem virtuellen Teil (203),
- wobei die Daten durch das Datenübertragungselement (201) zum virtuellen Teil (203) übertragen werden, wobei das digitale Abbild des Körpers (2,3,4) in Abhängigkeit der Daten verändert wird.

10. Verfahren nach Anspruch 9, wobei der Körper (2,3,4) vor und/oder während und/oder nach der Beträufelung um die Rotationsachse (A) rotiert wird, wobei durch das Erfassungselement (200) Daten des Imprägniermaterials (6) innerhalb des Körpers und/oder auf dem Körper, insbesondere eines Verlaufs und/oder eines Füllstands des Imprägniermaterials (6), erfasst werden, wobei durch das Datenübertragungselement (201) die Daten zum virtuellen Teil (203) übertragen werden, wobei das digitale Abbild des Körpers in Abhängigkeit der Daten verändert wird.

11. Verfahren nach einem der Ansprüche 9 oder 10, wobei bei Erkennen eines Imprägniermangels, eine Dosiermenge des Imprägniermaterials (6) und/oder ein Dosierort und/oder ein Stromfluss in der Wicklung (41) zur Änderung einer Wicklungstemperatur verändert wird.

12. Verfahren zur Erzeugung eines als digitales Abbild (4D) eines zu imprägnierenden physischen Körpers (2,3,4), mit wenigstens einer Wicklung (41, 41B), fungierenden Softwareobjekts (400), wobei das digitale Abbild (4D) einem virtuellen Teil (203) eines digitalen Zwillingssystems (1000) nach einem der Ansprüche 1 bis 8 angehört.

13. Verfahren nach Anspruch 12, wobei das Softwareobjekt (400) zyklisch verändert wird.

14. Physischer Körper (2,3,4), aufweisend wenigstens eine Wicklung (41,41B), insbesondere Stator oder Rotor einer dynamoelektrischen rotatorischen Maschine (1), als Teil des digitalen Zwillingssystems (1000) nach einem der Ansprüche 1 bis 8.
